# EUROPÄISCHE PATENTSCHRIFT

(11) **EP 1 769 877 B1**
(45) Veröffentlichungstag und Bekanntmachung des Hinweises auf die Patenterteilung: **02.06.2010**
(21) Anmeldenummer: 06020028.4
(22) Anmeldetag: 25.09.2006
(51) Int. Cl.: B23K 20/12, B29C 65/02, B29C 65/06, B23K 101/18, B23K 103/18

(54) **Verfahren und Vorrichtung zum Herstellen einer Schweissverbindung zwischen den Oberflächen zweier flächiger Werkstücke mit vollständigem Verlaufen des Kontaktbereiches des drehenden Reibrührwerkzeugs in der vom ersten Werkstück abgewandten Oberfläche des zweiten Werkstückes**
Process and device for producing a weldment between the surfaces of two flat workpieces, with total running of the contacting surface of the friction stir tool into the surface of the second workpiece opposing the first workpiece
Procédé et dispositif pour réaliser une liaison soudée entre deux pièces plates, avec une impression complète de la surface de contact de l'outill de friction agitation dans la surface de la deuxiéme pièce opposée à la première pièce

(30) Priorität: 26.09.2005 DE 102005045954
(43) Veröffentlichungstag der Anmeldung: 04.04.2007
(73) Patentinhaber: GKSS-Forschungszentrum Geesthacht GmbH, 21502 Geesthacht (DE)
(72) Erfinder: Roos, Arne, 21483 Juliusburg (DE); dos Santos, Jorge F., 21395 Avendorf (DE)
(74) Vertreter: UEXKÜLL & STOLBERG

(56) Entgegenhaltungen:
- WO-A-98/45080
- WO-A-2004/110692
- DE-A1- 19 731 638
- DE-A1- 19 746 812
- JP-A- 10 225 781
- JP-A- 2003 326 371
- JP-A- 2005 034 863
- US-A- 3 831 262
- US-A1- 2002 125 297
- US-A1- 2002 158 109

## Beschreibung

Die vorliegende Erfindung betrifft ein Verfahren zum Erstellen einer linienförmigen Schweißverbindung zwischen einem ersten Werkstück und einem zweiten Werkstück gemäß dem Oberbegriff des Anspruchs 1 (siehe, z.B., WO 2004/110 692).

Das Verschweißen flächiger Werkstücke, die mit ihren Oberflächen aneinander anliegen, sodass zwischen den zu verschweißenden Werkstücken ein sogenannter Parallelstoß gebildet wird, die Werkstücke sich also zumindest teilweise überlappen, hat sich vielfach als problematisch erwiesen. Durch den vergleichsweise hohen Energieeintrag, der bei herkömmlichen Schweißverfahren auftritt, kann es in den flächigen Werkstükken insbesondere im Bereich der Schweißnaht zu Gefügeveränderungen kommen, wobei diese Gefügeveränderungen die Materialeigenschaften negativ beeinflussen. Des Weiteren besteht die Gefahr, dass es zu einer ungleichmäßigen, wärmebedingten Ausdehnung der Werkstücke kommt, sodass diese in den Bereichen außerhalb der Schweißnaht nicht mehr flächig aneinander anliegen. Diese beiden Probleme sind insbesondere dann von Bedeutung, wenn zwei flächige Werkstücke nicht nur an einzelnen Abschnitten miteinander verbunden werden sollen, sondern sich entlang der einander anliegenden Oberflächen erstreckende linienförmige Schweißnähte erforderlich sind.

Um das Problem der hohen punktförmigen Energieeinträge in die flächigen Werkstücke zu vermeiden, ist das sogenannte Diffusionsschweißen entwickelt worden. Bei dem Prozess des Diffusionsschweißens werden zwei Werkstücke dadurch miteinander verbunden, dass die Werkstücke zumindest in dem Bereich, in dem eine Verbindung gebildet werden soll, aufgeheizt werden und gleichzeitig ein Druck senkrecht zu der Verbindungsfläche auf die Werkstücke ausgeübt wird. In Folge des Druckes und der erhöhten Temperatur setzen Diffusionsprozesse ein, aufgrund derer die aneinander anliegenden Werkstücke eine feste Verbindung eingehen.

Aus der WO 99/12694 ist bereits ein Verfahren und eine Vorrichtung zum Diffusionsschweißen bekannt, bei denen die zu verschweißenden Werkstücke gegeneinander gepresst werden und der Bereich der Schweißnaht induktiv oder durch eine andere Wärmequelle aufgeheizt wird, um die Diffusion zwischen den Werkstücken zu induzieren. Während die Werkstücke gegeneinander gepresst werden, können diese auch entlang der Verbindungsebene relativ zueinander bewegt werden, so dass Reibung zwischen den Werkstücken auftritt. Dabei werden durch die Reibung Oxide, die sich auf den Verbindungsflächen gebildet haben, entfernt. Ein nennenswerter Wärmeenergieeintrag erfolgt durch die Relativbewegung nicht.

Nachteilig am Diffusionsschweißen ist jedoch, dass es auch hier erforderlich ist, die zu verschweißenden Werkstücke, wenn auch in geringerem Maße, aufzuheizen, was bei Legierungen mit niedrigem Umwandlungstemperaturen immer noch dazu führen kann, dass es in den gesamten Werkstücken zu Gefügeveränderungen kommt und damit verbunden zu einer Veränderung der Werkstoffeigenschaften.

Im Unterschied zum Diffusionsschweißen hat sich das Reibrührschweißen als ein Verfahren erwiesen, bei dem die über das gesamte Volumen der Werkstücke eingebrachten Wärmeenergie vergleichsweise gering ist. So ist beispielsweise aus der WO 93/10935 bekannt, zwei Werkstücke entlang eines Stumpfstoßes dadurch zu verbinden, dass ein rotierender Stift entlang der Verbindungsfläche zwischen den Werkstücken bewegt wird, wobei es zu einer Plastifizierung des Materials der Werkstücke in dem Bereich nahe der Verbindungsfläche kommt. Nach dem anschließenden Erstarren des plastifizierten Bereichs hat sich eine stoffschlüssige Verbindung gebildet.

Aus der WO 01/36144 ist zusätzlich bekannt, zur Verbindung zweier flächiger Werkstücke, die entlang ihrer Oberflächen aneinander anliegen, einen rotierenden Stift zunächst in das erste obere Werkstück und anschließend in das zweite darunter liegende Werkstück abzusenken, wobei das dabei plastifizierte Material aufgefangen und später nach dem Herausziehen des Stifts in das verbleibende Loch gepresst wird. Auf diese Weise kann auch mittels des Reibrührschweißens eine Parallelstoß-Verbindung zwischen zwei flächigen Werkstücken hergestellt werden. Nachteilig an diesem Verfahren ist jedoch, dass nur punktförmige Verbindungen hergestellt werden können und es außerdem erforderlich ist, dass der Stift in beide Werkstücke eindringt, sodass es im Bereich der Verbindung zu einer Durchmischung der Materialien der Werkstücke kommt. Dies ist insbesondere dann unerwünscht, wenn Werkstücke aus unterschiedlichem Material miteinander verbunden werden sollen, wobei die Trennung der Materialien im Wesentlichen erhalten bleiben soll.

Die US 3 831 262 A offenbart, linienförmige schweißnahtlose Verbindungen mittels eines Reibwerkzeugs herzustellen, dessen Rotationsachse parallel zur Verbindungsebene verläuft. Hierbei werden zwei miteinander zu verbindende Metallteile bei ausreichend hohem Druck in dem Bereich in Kontakt miteinander gehalten, in dem sie verbunden werden sollen. Die Verbindung der Metallteile wird durch eine Reibbehandlung hergestellt, die eine Relativbewegung zwischen einem Reibwerkzeug und der Oberfläche eines zu verbindenden Teiles umfasst. Das Reibwerkzeug ist hierbei eine schnell rotierende Scheibe, die um eine Achse rotiert, die parallel zur Ebene der Grenzfläche zwischen den Metallteilen verläuft.

In der DE 197 31 638 A1 wird ein Reibrührschweißverfahren zur Erstellung punktförmiger Verbindungen beschrieben. Hierbei dringt der Bolzen in das obere Material eines Reibpartners, einem zweiten Werkstück, ein, so dass der Kontaktbereich zwischen der Reibfläche und dem zweiten Werkstück in dem Inneren des zweiten Werkstückes verläuft.

Die WO 98/45080 A betrifft ein Verfahren und eine Vorrichtung zum Reibrührschweißen, wobei ein rotierender Stift zum Fügen zweier nebeneinander angeordneter Werkstücke verwendet wird.

In der JP 2003 326371 A wird ein Verfahren zum Reibrührschweißen offenbart, bei dem ein Stift in den Fügebereich zweier nebeneinander angeordneter Werkstücke eindringt.

Die DE 197 46 812 A1 ein Verfahren zur Herstellung einer linienförmigen Schweißverbindung, bei der ein Reibkörper entlang der Lagen zweier oder mehrerer übereinanderliegender Werkstükke so geführt wird, dass dieser die Lagen durchdringt. Dadurch kommt es, wie auch in der WO 98/45080 A und JP 2003 326371 A, zu einer Durchmischung der Werkstückmaterialien.

Die JP 10 225781 A offenbart ein Verfahren zum Reibrührschweißen, bei dem ein Stift in eine Fügenaht eingebracht wird. Auch hier kommt es zu einer Durchmischung der Werkstückmaterialien.

Das Problem eines möglichst niedrigen Wärmeeintrags verbunden mit einer möglichst sauberen Trennung unterschiedlicher Materialien tritt insbesondere bei der Herstellung sogenannter A1-U/Mo-Al-Sandwich-Kernbrennelementen auf. Diese, zur Verwendung in Kernreaktoren vorgesehenen, Reaktorbrennelemente umfassen zwei Aluminium-Deckbleche, zwischen denen sich ein Uran-Molybdän-Blech befindet.

Um einerseits sicherzustellen, dass das spaltbare Uran-Material sicher eingeschlossen ist und sich andererseits keine Gaseinschlüsse in dem Brennelement befinden, die sich bei Erhitzung ausdehnen können, ist es erforderlich, die einzelnen Bleche miteinander zu verbinden. Um das Problem der Gaseinschlüsse sicher zu eliminieren, ist es insbesondere erforderlich, nicht nur punktförmige Verbindungen vorzusehen, sondern meanderförmig über die Fläche der Brennelemente linienförmig verlaufende Verbindungen. Damit des Weiteren die Energieverteilung der aus dem Brennelement austretenden Neutronen eindeutig festgelegt ist, sollte es nicht zu einer Durchmischung des A1 der Deckbleche mit dem U-Mo kommen.

Hinsichtlich des U-Mo hat es sich herausgestellt, dass bei diesem Material schon bei niedrigen Temperaturen Gefügeveränderungen auftreten, die dazu führen, dass das Material für den weiteren Einsatz als Reaktorbrennelement ungeeignet ist. Dies führt dazu, dass die in die Werkstücke eingebrachte Energie beim Erstellen der Verbindung möglichst gering gehalten werden muss.

Damit liegt der vorliegenden Erfindung die Aufgabe zugrunde, ein Verfahren zum Erstellen einer linienförmigen Schweißverbindung zwischen zwei Werkstücken entlang eines Parallelstoßes bereitzustellen, bei der Wärmeenergieeintrag in die Werkstücke gering gehalten wird und eine Durchmischung der Materialien der Werkstücke vermieden wird.

Diese Aufgabe wird durch ein Verfahren gemäß Anspruch 1 gelost.

Erfindungsgemäß verläuft der Kontaktbereich zwischen der Reibfläche und dem zweiten Werkstück vollständig in der von dem ersten Werkstück abgewandten Oberfläche des zweiten Werkstücks. Zu einem Reibkontakt zwischen dem zweiten Werkstück einerseits und dem Reibwerkzeug andererseits kommt es damit nur in der Oberfläche des zweiten Werkstücks, die von dem ersten Werkstück abgewandt ist. Ein Eindringen des Reibwerkzeugs in das Volumen des zweiten Werkstücks erfolgt somit nicht, sodass insbesondere strukturelle Veränderungen des zweiten Werkstücks und auch des ersten Werkstücks vermieden werden. Es kann lediglich vorkommen, dass das zweite Werkstück infolge des Drucks, der durch das Reibwerkzeug ausgeübt wird, zusammengepresst wird.

Der Wärmeeintrag in die Werkstücke erfolgt nur durch die von dem ersten Werkstück abgewandten Oberfläche des zweiten Werkstücks, wobei das Material des zweiten Werkstücks unterhalb des Reibwerkzeugs plastifiziert wird. Die Rotationsgeschwindigkeit des Werkstücks ist dabei derart gewählt, dass der Energieeintrag in das zweite Werkstück ausreichend ist, eine Schweißverbindung zwischen dem ersten unteren Werkstück und dem zweiten oberen Werkstück zu bilden.

Neben der Eigenschaft, dass das Reibwerkzeug nicht in das Material der zu verbindenden Werkstücke eindringt, ergibt sich außerdem, dass auch der Wärmeenergieeintrag lokal auf dem Bereich in der Nähe des Reibwerkzeuges beschränkt bleibt. Eine großflächige Erwärmung der Werkstücke erfolgt nicht. Schließlich erfolgt auch keine Durchmischung der Materialien der beiden zu verbindenden Werkstücke, sondern die Grenzflächen bleiben im Wesentlichen unbeeinflusst.

Damit wird durch das erfindungsgemäße Verfahren erreicht, dass es bei dem Bilden der Schweißverbindung insbesondere in dem ersten unteren Werkstück zu keinen oder nur sehr geringfügigen Veränderungen des Gefüges des Materials kommt, wobei die geringfügigen Veränderungen dann auf den Bereich der Schweißnaht beschränkt sind.

Außerdem ist es mit dem erfindungsgemäßen Verfahren möglich, Werkstücke mit einer Beschichtung, beispielsweise zur Erhöhung der Oberflächenhärte oder zum Korrosionsschutz, zu versehen. Dazu wird das Material der Beschichtung in Form einer dünnen Folie als zweites Werkstück im Sinne des Verfahrens auf das zu beschichtende erste Werkstück aufgebracht. Anschließend können die Folie und das Werkstück mittels des erfindungsgemäßen Verfahrens miteinander verbunden werden.

Um das Ausmaß des Bereichs des zweiten Werkstücks, der während des Rotierens des Reibwerkzeugs plastifiziert wird, beeinflussen zu können, ist es bevorzugt, wenn beim Rotieren des Reibwerkzeugs ein vorbestimmter Druck auf die Oberfläche des zweiten Werkstücks ausgeübt wird.

Zur Erstellung einer linienförmigen Schweißverbindung zwischen den Werkstücken wird das Reibwerkzeug während dessen Rotation entlang der Oberfläche des zweiten Werkstücks bewegt. Um dabei zu vermeiden, dass das Reibwerkzeug in die Oberfläche des zweiten Werkstücks eindringt, ist es bevorzugt, dass das zweite Werkstück in Bewegungsrichtung vor dem Reibwerkzeug auf das erste Werkstück gedrückt wird. Dies verhindert ein Aufwölben des zweiten Werkstücks, was insbesondere durch die lokale Temperaturveränderung aufgrund der lokalen Erwärmung auftreten kann.

In einer weiteren bevorzugten Ausführungsform des erfindungsgemäßen Verfahrens wird das erste, von dem Reibwerkzeug abgewandten Werkstück zusätzlich aufgeheizt, wodurch die Energie reduziert wird, die durch Reibung in das zweite Werkstück eingebracht werden muss, um eine Schweißverbindung zu erzeugen. Dabei kann das erste Werkstück mittels eines Heizelements geheizt werden, auf dem dieses aufliegt. Die Wärmeenergie kann in einer anderen bevorzugten Ausführungsform auch induktiv in das erste Werkstück eingebracht werden. Ferner ist es bevorzugt, wenn die Wärmeenergie in einem Bereich unterhalb des Reibwerkzeugs eingebracht wird, sodass sich die Quelle für die Wärmeenergie und der Ort des Energieeintrags über Reibung einander gegenüberliegen. In diesem Fall bleibt der Bereich der Werkstücke, der durch die Herstellung der Verbindung beeinflusst wird, auf den Verbindungsbereich beschränkt.

Die Höhe des Energieeintrags in die Werkstücke infolge des Aufheizens ist in jedem Fall jedoch weit unterhalb der Schwelle, ab der in den Werkstücken Gefügeveränderungen auftreten.

In einer weiteren bevorzugten Ausführungsform des erfindungsgemäßen Verfahrens wird ein drittes flächiges Werkstück bereitgestellt, und das erste und das zweite Werkstück werden darüber angeordnet. Anschließend erfolgt das Aufsetzen und Rotieren des Reibwerkzeuges auf der von dem ersten Werkstück abgewandten Oberfläche des zweiten Werkstücks. Auf diese Weise kann eine Schweißverbindung zwischen den einzelnen Elementen eines Sandwich-Bauelements, insbesondere eines Reaktorbrennelements, mit den bereits erwähnten Vorteilen hergestellt werden.

Außerdem ist es bevorzugt, wenn die Werkstücke, entlang ihrer Außenkanten gehalten werden und eine erste Zugspannung auf die Werkstücke ausgeübt wird, die parallel zu der Ebene der an dem Reibwerkzeug anliegenden Oberfläche des zweiten Werkstücks verläuft. Außerdem wird in einer weiteren bevorzugten Ausführungsform eine zweite Zugspannung auf die Werkstücke ausgeübt, die ebenfalls parallel zu der Ebene der an dem Reibwerkzeug anliegenden Oberfläche verläuft und zumindest eine Komponente aufweist, die senkrecht zu der ersten Zugspannung verläuft. Auf diese Weise werden die Werkstücke vorgespannt und es kommt beim Bilden der Verbindung nicht zu Wölbungen in den Werkstükken.

Das Reibwerkzeug wird um eine Achse rotiert, die senkrecht zu der von dem ersten Werkstück abgewandten Oberfläche des zweiten Werkstücks verläuft, was einen vergleichsweise großen Kontaktbereich ermöglicht. Dabei sind an einer kreisförmig ausgebildeten Reibfläche Mittel vorgesehen, die einen Materialtransport vom Außenrand der Reibfläche zur Rotationsachse hin bewirken. Dadurch wird verhindert, dass durch den Reibkontakt plastifiziertes Material aus dem Kontaktbereich herausgetragen wird.

Andererseits ist es auch möglich, dass das Reibwerkzeug um eine Achse rotiert wird, die geneigt zur Senkrechten der Oberfläche des zweiten Werkstücks verläuft. Insbesondere kann die Rotationsachse dann parallel zur Oberfläche des zweiten Werkstücks verlaufen, wobei in diesem Fall die Ausdehnung des Kontaktbereichs auf eine Linie minimiert wird.

Ferner ist es bevorzugt, wenn vor dem Anordnen des zweiten Werkstücks auf dem ersten Werkstück die zu dem zweiten Werkstück weisende Oberfläche des ersten Werkstücks zumindest teilweise bestrahlt wird. Hierbei kommen Laserbestrahlung oder Elektronenbestrahlung in Frage. Beides ist mit dem Vorteil verbunden, dass Oxide, die sich auf der Oberfläche des ersten Werkstücks gebildet haben, entfernt werden, sodass die Werkstücke in diesem Bereich leichter eine Verbindung eingehen können. Denn Oxidschichten können als Diffusionsbarriere wirken und damit die Bildung einer stoffschlüssigen Verbindung erschweren. Außerdem dient insbesondere die Elektronenbestrahlung dazu, Mikrobohrungen auf der Fügefläche des ersten Werkstücks zu erzeugen, was zu einem mechanischen "Verzahnen" der Werkstücke und damit zu einer stabileren Verbindung führt.

Außerdem ist es bevorzugt, wenn der Bereich zwischen den Werkstücken beispielsweise mittels einer Vakuumpumpe evakuiert wird, sodass die Werkstücke eng aneinander anliegen und es nicht zu Gaseinschlüssen zwischen den Werkstücken kommen kann.

Zur Durchführung des erfindungsgemäßen Verfahrens kann eine Vorrichtung bereitgestellt werden mit einem um eine Rotationsachse rotierend antreibbaren Reibwerkzeug mit einer Reibfläche, mit einer Halteeinrichtung zum Fixieren wenigstens zweier zumindest teilweise aufeinander aufliegender Werkstücke in einer Werkstückebene, wobei im fixierten Zustand die Oberfläche eines der Werkstücke dem Reibwerkzeug zugewandt ist, wobei die Reibfläche auf die dem Reibwerkzeug zugewandte Oberfläche eines der Werkstücke aufsetzbar ist und wobei die Reibfläche derart ausgestaltet ist, dass beim Rotieren der Reibfläche auf der dem Reibwerkzeug zugewandten Oberfläche eines der Werkstücke der Kontaktbereich zwischen der Reibfläche und dem Werkstück vollständig in der dem Reibwerkzeug zugewandten Oberfläche verläuft.

Die Reibfläche ist derart ausgebildet, dass der Kontaktbereich zwischen der Reibfläche und dem zweiten Werkstück vollständig in der von dem ersten Werkstück abgewandten Oberfläche des zweiten Werkstücks verläuft, sodass die Reibfläche beispielsweise eben ausgebildet sein kann. Zu einem Reibkontakt zwischen dem zweiten Werkstück einerseits und dem Reibwerkzeug andererseits kommt es damit nur in der Oberfläche des zweiten Werkstücks, die von dem ersten Werkstück abgewandt ist und ein Eindringen des Reibwerkzeugs in das Volumen des zweiten Werkstücks erfolgt nicht, sodass insbesondere strukturelle Veränderungen des zweiten Werkstücks und auch des ersten Werkstücks vermieden werden.

In Bezug auf die mit einer solchen Vorrichtung verbundenen Vorteile kann auf die Erläuterungen zu dem erfindungsgemäßen Verfahren verwiesen werden. Insbesondere wird durch die Vorrichtung zur Durchführung des erfindungsgemäßen Verfahrens der Wärmeenergieeintrag in die Werkstücke reduziert und es kommt nicht zu einer Durchmischung der Materialien der einzelnen Werkstücke.

Um effektiv einen Abtrag plastifizierten Materials in der Ebene einer an einem zylindrischen Reibwerkzeug ausgebildeten kreisförmigen Reibfläche zu verhindern, deren Rotationsachse senkrecht zur Stützfläche verläuft, ist in einer bevorzugten Ausführungsform der Vorrichtung zur Durchführung des erfindungsgemäßen Verfahrens die Reibfläche mit Nuten versehen, die vom äußeren Randbereich der Reibfläche ausgehen und zur Tangente des Umfangs der Reibfläche zum Zentrum hin geneigt verlaufen. Weiter bevorzugt sind die Nuten zum Zentrum der Reibfläche hin gekrümmt. Dabei fungieren die Nuten als Kanäle, in denen plastifiziertes Material zum Zentrum der Reibfläche hin gefördert wird.

In einer alternativen Ausführungsform der Vorrichtung zur Durchführung des erfindungsgemäßen Verfahrens weist die Reibfläche eine sphärische Form auf, sodass sich das Reibwerkzeug auch auf gekrümmte Werkstückoberflächen aufsetzen lässt. Dies ist insbesondere dann vorteilhaft, wenn die Vorrichtung zur Beschichtung von Werkstücken eingesetzt werden soll, wobei die Beschichtung zunächst in Form einer dünnen Folie aufgebracht wird. Hier ist insbesondere eine Anwendung bei Gelenkpfannen denkbar.

In einer weiteren alternativen Ausführungsform ist das Reibwerkzeug als Zylinder ausgebildet, wobei die Umfangsfläche des Zylinders die Reibfläche bildet. In diesem Fall ist der Kontaktbereich zwischen Reibfläche und Oberfläche des Werkstücks auf eine Kontaktlinie beschränkt, sodass der Energieeintrag in das zweite Werkstück durch Reibung in einem möglichst kleinen Bereich erfolgt.

Um auch in diesem Fall zu gewährleisten, dass kein Material aus dem Kontaktbereich entfernt wird, ist die Umfangsfläche weiter bevorzugt mit einer ersten und einer zweiten spiralförmigen Umfangsnut versehen, wobei die erste Umfangsnut von dem ersten Ende des Zylinders zur Mitte hin verläuft und die zweite Umfangsnut von dem zweiten Ende hin zur Mitte verläuft und wobei die Umfangsnuten mit zueinander entgegengesetzter Steigung auf die Mitte des Zylinders zulaufen.

Ferner ist es bevorzugt, wenn die Vorrichtung zur Durchführung des erfindungsgemäßen Verfahrens zum Einbringen von Wärmeenergie in das erste Werkstück ein elektrisches Widerstandsheizelement aufweist, das sich einfach regeln lässt. Alternativ zu dem Widerstandsheizelement kann auch eine Induktionsspule vorgesehen sein, mittels derer metallische Werkstücke berührungslos geheizt werden können.

In einer ersten Alternative ist unterhalb der Haltevorrichtung eine Stützfläche vorgesehen, und die gesamte Stützfläche ist mit Heizelementen versehen, sodass das gesamte erste Werkstück geheizt wird und es nicht zu Spannungen innerhalb des ersten Werkstücks aufgrund von Temperaturdifferenzen kommt. In einer zweiten Alternative ist das Heizelement beweglich relativ zu der Stützfläche angeordnet, sodass das Heizelement parallel zu dem Reibwerkzeug bewegt werden kann, um den Bereich der Werkstücke zu minimieren, der aufgeheizt wird.

Im Folgenden wird die vorliegende Erfindung anhand einer lediglich bevorzugte Ausführungsbeispiele zeigenden Zeichnung erläutert. In der Zeichnung zeigen
- Fig. 1: ein Ausführungsbeispiel einer Vorrichtung zur Durchführung des erfindungsgemäßen Verfahrens im Längsschnitt,
- Fig. 2: die Vorrichtung aus Fig. 1 in Seitenansicht,
- Fig. 3: die Vorrichtung aus Fig. 1 in Draufsicht,
- Fig. 4: das Reibwerkzeug der Vorrichtung aus Fig. 1 aufge- setzt auf die Oberfläche eines Werkstückstapels
- Fig. 5: ein erstes Ausführungsbeispiel eines Reibwerkzeugs in perspektivischer Darstellung (a) und in Drauf- sicht (b),
- Fig. 6: ein zweites Ausführungsbeispiel eines Reibwerkzeugs in Draufsicht,
- Fig. 7: ein drittes Beispiel eines Reibwerkzeugs in Seitenansicht,
- Fig. 8: ein viertes Beispiel eines Reibwerkzeugs in perspektivischer Darstellung,
- Fig. 9: einen Niederhalter für eine Vorrichtung gemäß Fig. 1 in Ansicht von hinten, Seitenansicht und An- sicht von oben,
- Fig. 10: eine erste schematische Darstellung zu einem ersten Ausführungsbeispiel des erfindungsgemäßen Verfah- rens und
- Fig. 11: eine schematische Darstellung zu einem Aus- führungsbeispiel des Verfahrens, das nicht im Gegenstand der Erfindung steht.

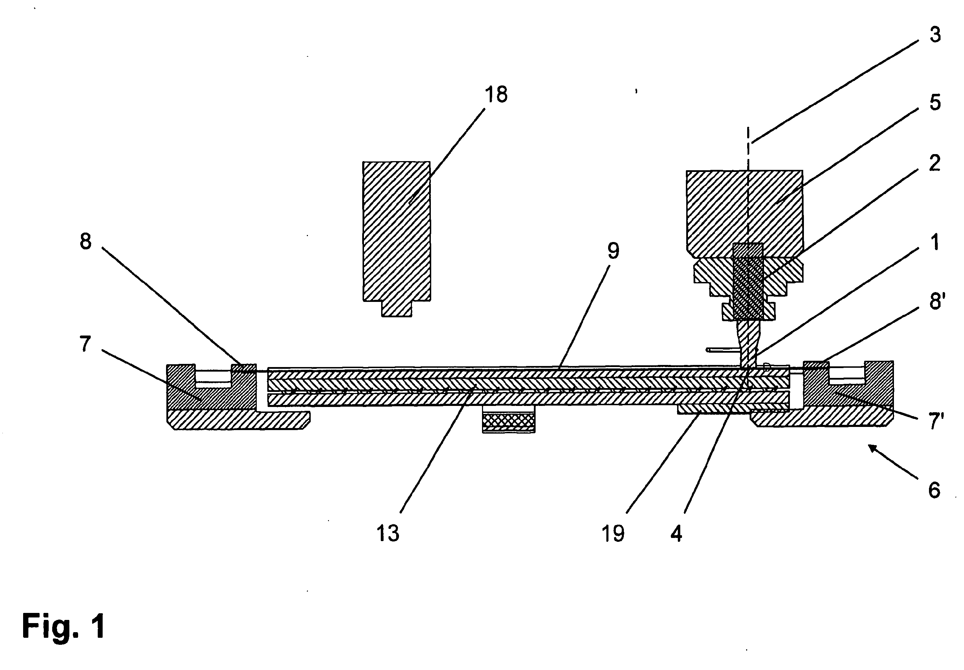

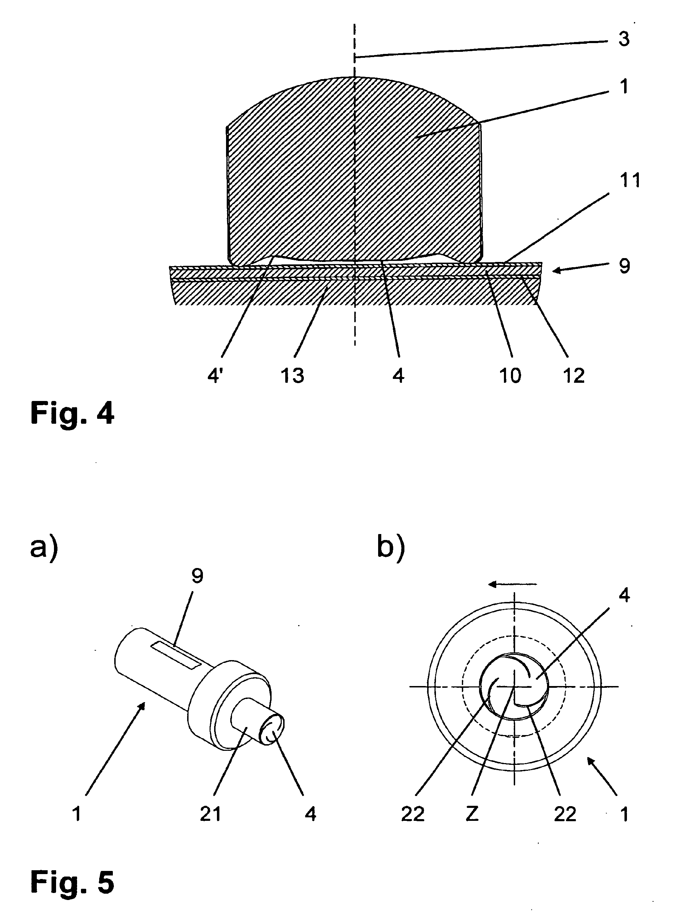

Das in den Fig. 1 bis 4 dargestellte Ausführungsbeispiel einer erfindungsgemäßen Vorrichtung zur Erstellung einer Schweißverbindung zwischen flächigen Werkstücken weist ein Reibwerkzeug 1 auf, das mit einem Antrieb 2 verbunden ist. Der Antrieb 2 treibt das Reibwerkzeug 1 rotierend um eine Rotationsachse 3 an, wobei das im unteren Abschnitt zylindrisch ausgebildete Reibwerkzeug 1 eine kreisförmige, senkrecht zur Rotationsachse 3 angeordnete Reibfläche 4 aufweist (siehe auch Fig. 4). Das Reibwerkzeug 1 ist zusammen mit dem Antrieb 2 an einer Aufnahme 5 angebracht.

Unterhalb der Aufnahme 5 mit dem Reibwerkzeug 1 ist eine Halteeinrichtung 6 vorgesehen, die erste Klemmelemente 7, 7' aufweist, die wiederum mit ersten Klemmbacken 8, 8' versehen sind. In die ersten Klemmbacken 8, 8' kann ein Werkstückstapel 9 eingespannt werden, wobei der Werkstückstapel 9 ein erstes zentrales Werkstück 10, ein darüber angeordnetes zweites Werkstück 11 und ein unterhalb des ersten Werkstücks 10 angeordnetes drittes Werkstück 12 umfasst. Die Werkstücke 10, 11 und 12 sind dabei flächenförmig ausgebildet, d.h. dass ihre Abmessungen in der Länge und Breite weit über der Dicke der Werkstücke 10, 11 und 12 liegen. Insbesondere kann das erste Werkstück 10 eine Stärke zwischen 2 mm und 5 mm haben, während das zweite Werkstück 11 ("Deckblech") zwischen 0,2 mm und 0,5 mm dick sein kann.

Der Werkstückstapel 9 liegt in der Werkstückebene, die durch die Halteeinrichtung 6 festgelegt wird. Unterhalb des Werkstückstapels 9 ist eine Stützfläche 13 vorgesehen, auf der der Werkstückstapel 9 aufliegt.

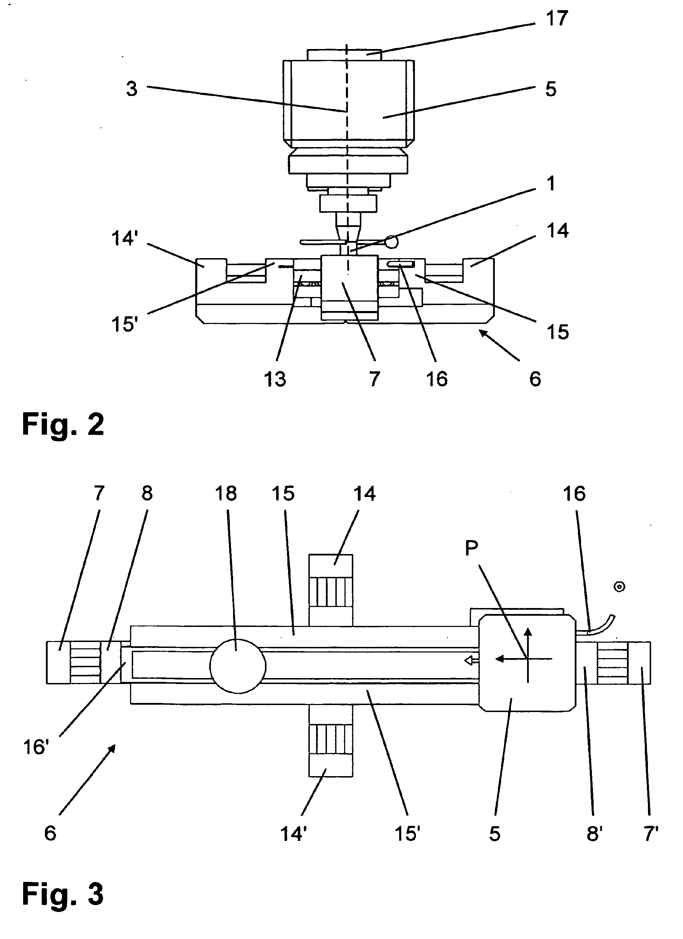

Wie insbesondere Fig. 3 zu entnehmen ist, weist die Halteeinrichtung 6 zweite Klemmelemente 14, 14' auf, die mit zweiten Klemmbacken 15, 15' zum Einspannen des Werkstückstapels 9 versehen sind. Die ersten Klemmelemente 7, 7' mit den Klemmbacken 8, 8' liegen einander gegenüber wie auch die zweiten Klemmelemente 14, 14' mit den zweiten Klemmbacken 15, 15'. Dabei sind die Klemmbacken 8, 8' senkrecht zu den Klemmbacken 15, 15' angeordnet und insgesamt umschließen die Klemmbacken 8, 8', 15, 15' den Werkstückstapel 9 vollständig. Dadurch ist der Zwischenraum zwischen den Werkstücken 10, 11 und 12 des Werkstückstapels 9 vollständig abgeschlossen und kann über einen Vakuumanschluss 16 (siehe Fig. 2 und 3) evakuiert werden, wobei zur Abdichtung eine Vakuumdichtung 16' vorgesehen ist.

Außerdem weist die Vorrichtung zur Durchführung des erfindungsgemäßen Verfahrens Mittel auf, um die Aufnahme 5 mit dem Reibwerkzeug 1 parallel zur Werkstückebene des Werkstückstapels 9 zu bewegen, wie in Fig. 3 mit den die Pfeilen P angedeutet ist. Außerdem ist die Aufnahme 5 mit einem Hydraulikzylinder 17 versehen, um einen vorbestimmten Druck durch das Reibwerkzeug 1 auf die Werkstücke 10, 11 und 12 senkrecht zu der Stützfläche 13 auszuüben.

Die Klemmelemente 7, 7' sowie 14, 14' sind außerdem mit Mitteln versehen, um deren Abstand jeweils zu vergrößern, sodass der Werkstückstapel 9 in zwei Richtungen, die in der werkstükkebene und senkrecht zueinander verlaufen, vorgespannt werden kann.

Oberhalb der Werkstückebene und damit oberhalb des Werkstückstapels 9 ist eine ebenfalls parallel zur Werkstückebene verfahrbare Elektronenkanone 18 vorgesehen, die zu dem Werkstückstapel 9 ausgerichtet ist. Damit kann die Oberfläche der Werkstücke 10, 11 und 12 durch Bestrahlung gegebenenfalls von einer Oxidschicht befreit werden.

Unterhalb der Stützfläche 13 ist ein in der Ebene der Stützfläche verfahrbares Induktionsheizelement 19 angeordnet, mit dem lokal begrenzt Wärmeenergie in den Werkstückstapel 9 eingebracht werden kann. Alternativ kann statt des Induktionsheizelements 19 auch ein Widerstandsheizelement vorgesehen sein. Weiterhin ist es auch denkbar, dass die gesamte Stützfläche 13 beheizt wird, sodass über den gesamten Bereich des Werkstückstapels 9 Wärmeenergie in die von dem Reibwerkzeug 1 beabstandeten Werkstücke 10, 12 eingebracht wird.

Die Reibfläche 4 des Reibwerkzeugs 1 ist derart ausgestaltet, dass der Kontaktbereich zwischen der Reibfläche 4 und dem zweiten Werkstück 11 vollständig in der Oberfläche des zweiten Werkstücks 11 verläuft, wenn das Reibwerkzeug 1 auf dem zweiten Werkstück aufliegt und um die Rotationsachse 3 rotiert wird. Dadurch kommt es nur in der Oberfläche des zweiten Werkstücks 11, die von dem ersten Werkstück 10 abgewandt ist, zu einem Reibkontakt zwischen dem zweiten Werkstück 11 einerseits und dem Reibwerkzeug 1 andererseits.

Wie insbesondere Fig. 4 zu entnehmen ist, weist die Reibfläche 4 keinerlei Vorsprünge auf, die bei einer Rotation des Reibwerkzeuges 1 in den Werkstückstapel 9 eindringen könnten. Vielmehr ist die Reibfläche 4 nahezu eben ausgebildet, sodass das Reibwerkzeug 1 ausschließlich an der Werkstückoberfläche reibt und nicht etwa in die Werkstücke 10, 11 und 12 eindringt, wenn diese aufgrund der Reibungswärme plastifiziert werden. Die Reibfläche 4 ist lediglich mit einer rotationssymmetrischen Profilierung versehen, um einen Materialabtrag aus dem Kontaktbereich zu verhindern, wobei die Profilierung eine umlaufende Vertiefung 4' aufweist.

Wie das in Fig. 5 dargestellte Ausführungsbeispiel eines Reibwerkzeuges 1 zeigt, ist dieses mit einem Anschlussabschnitt 20 versehen und einem zylindrischen vorderen Abschnitt 21, der die senkrecht dazu verlaufende Reibfläche 4 aufweist, die im Unterschied zum in Fig. 4 erläuterten Ausführungsbeispiel nicht profiliert sondern eben ist. Die Reibfläche 4 ist mit Mitteln zum Materialtransport in der Ebene der Reibfläche 4 versehen. Diese Mittel weisen Nuten 22 auf, die vom äußeren Randbereich der Reibfläche 4 ausgehen und des Weiteren zum Zentrum Z hin geneigt zur Tangente des Umfangs der Reibfläche 4 verlaufen. Dabei sind die Nuten 22 zusätzlich zum Zentrum hin gekrümmt. Wenn sich das Reibwerkzeug 1 entsprechend dem Pfeil in Fig. 5 b) dreht, wird Material, das durch Reibungswärme plastifiziert worden ist, vom Randbereich der Reibfläche 4 in den Nuten 22 zum Zentrum hin bewegt, sodass diese als Kanäle fungieren.

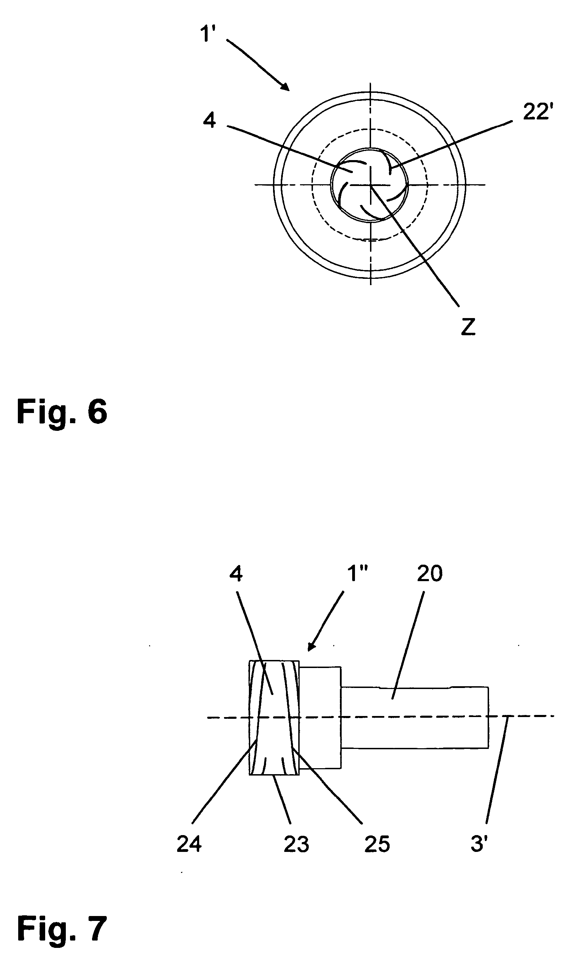

Das in Fig. 6 dargestellte zweite Ausführungsbeispiel eines Reibwerkzeugs 1' unterscheidet sich von dem in Fig. 5 dargestellten zum einen dadurch, dass es statt nur dreier Nuten 22 fünf Nuten 22' aufweist, die aber ähnlich den Nuten 22 des ersten Ausführungsbeispiels ausgebildet sind. Zum anderen ist die Reibfläche 4 mit einer Profilierung versehen, wie sie bereits im Zusammenhang mit Fig. 4 erläutert worden ist.

Das in Fig. 7 dargestellte alternative Beispiel eines Reibwerkzeugs 1" ist für den Fall vorgesehen, dass die Rotationsachse 3' des Reibwerkzeugs 1" parallel zur Oberfläche des zweiten Werkstücks 11 und damit zur Werkstückebene verläuft und dass die Reibfläche 4 dann durch die Umfangsfläche des Zylinderabschnitts 23 des Reibwerkzeugs 1" gebildet wird. Um während des Reibens an der Oberfläche des zweiten Werkstücks 11 einen Materialtransport hin zur Mitte der Reibfläche 4 zu erreichen, ist diese mit einer ersten spiralförmigen Umfangsnut 24 versehen, die von dem ersten Ende des Zylinderabschnitts 23 zu dessen Mitte hin verläuft. Des Weiteren ist das Reibwerkzeug 1" mit einer zweiten spiralförmig verlaufenden Umfangsnut 25 versehen, die sich von dem zweiten Ende zur Mitte hin erstreckt. Dabei laufen die Umfangsnuten 24, 25 mit zueinander entgegengesetzter Steigung auf die Mitte des Zylinderabschnitts 23 zu.

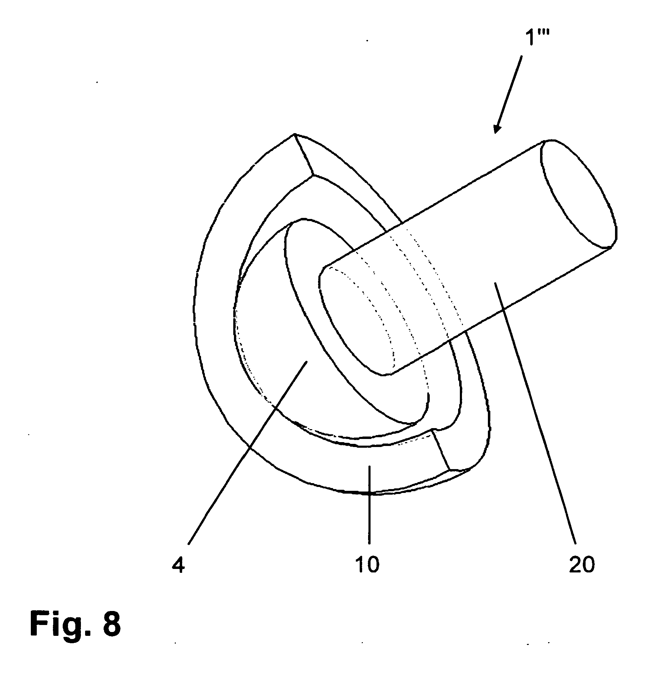

In Fig 8 ist ein viertes Beispiel eines Reibwerkzeugs 1"'zur Durchführung des erfindungsgemäßen Verfahrens dargestellt. In diesem Fall weist das Reibwerkzeug 1"' neben dem Anschlussabschnitt 20 eine sphärische Reibfläche 4 auf, was mit dem Vorteil verbunden ist, dass auch Werkstücke 10 mit gekrümmten Oberflächen von dem Reibwerkzeug 1"' bearbeitet werden können, wie dies in Fig. 8 angedeutet ist. Eine solche Ausgestaltung der Reibfläche 4 ist dann vorteilhaft, wenn die Vorrichtung zur Beschichtung von Werkstücken 10 eingesetzt werden soll, wobei die Beschichtung zunächst in Form einer dünnen Folie aufgebracht wird. Anschließend wird durch das erfindungsgemäße Verfahren eine Verbindung zwischen dem Werkstück 10 und der Folie hergestellt. Hierbei ist insbesondere eine Anwendung bei Gelenkpfannen denkbar.

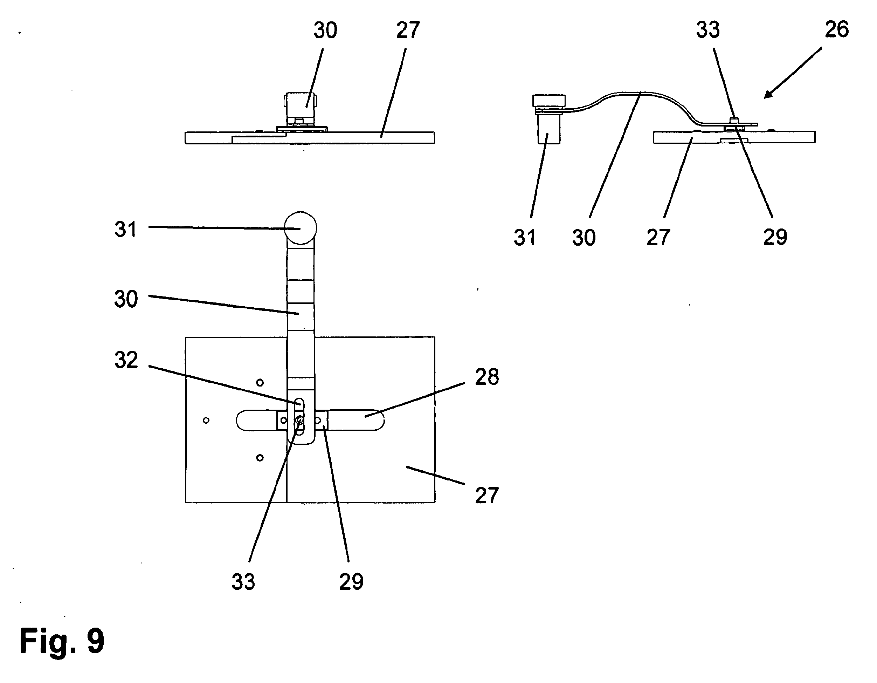

Um zu verhindern, dass sich insbesondere das oberste, zweite Werkstück 11 des Werkstückstapels 9 während der Rotation des Reibwerkzeuges 1 auf dessen Oberfläche wölbt, kann an der in den Fig. 1 bis 4 dargestellten Vorrichtung ein in Fig. 9 wiedergegebener Niederhalter 26 vorgesehen sein. Der Niederhalter 26 umfasst ein Auflageblech 27, das zweiteilig ausgebildet ist und einen Schlitz 28 aufweist, in dem ein Messingblock 29 verschiebbar gelagert ist. Des Weiteren weist der Niederhalter 26 eine Blattfeder 30 auf, die mit einem ersten Ende schwenkbar mittels eines Bolzens 31 mit der Halteeinrichtung verbunden ist. Das zweite Ende der Blattfeder 30 ist mit einem Langloch 32 versehen und drückt auf den Messingblock 29. In dem Langloch 32 ist ferner ein Bolzen 33 angeordnet, der sich in dem Langloch bewegen kann und mit dem Messingblock 29 verbunden ist.

Neben dem Messingblock 29 wird in dem Schlitz 28 das Reibwerkzeug 1 positioniert und bewegt sich in dem Schlitz 28, wobei es den Messingblock 29 vor sich herschiebt. Aufgrund der Wirkung der Blattfeder 30 drückt der Messingblock 29 die Werkstücke 10, 11 und 12 in Richtung der Stützfläche 13 und verhindert somit ein Aufwölben der Werkstücke 10, 11 und 12.

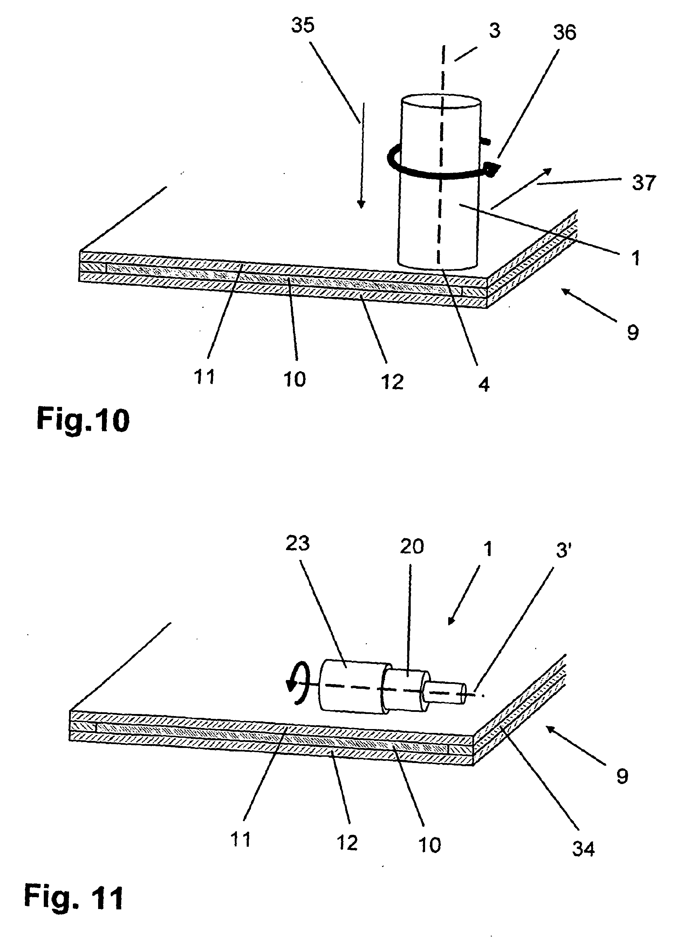

Im Folgenden wird unter Bezugnahme auf die Fig. 10 das erfindungsgemäße Verfahren zum Erstellen einer linienförmigen Schweißverbindung zwischen einem ersten Werkstück 10 und wenigstens einem zweiten Werkstück 11 erläutert, wobei in dieser bevorzugten Ausführungsform des Verfahrens das erste und das zweite Werkstück 10, 11 auf einem dritten Werkstück 12 angeordnet werden. Dabei gibt die Darstellung in Fig. 10 die Situation wieder, wie sie bei einem Al-U/Mo-Al-Kernbrennelement auftritt. Dabei sind das zweite Werkstück 11 und das dritte Werkstück 12 jeweils Aluminiumbleche, die ein U/Mo-Blech im Inneren als erstes Werkstück 10 umgeben. Dabei ist das erste Werkstück 10 außerdem noch von einem Ringelement 34 aus Aluminium umgeben.

Bei einer derartigen Anwendung kommt es darauf an, dass das erste Werkstück 10 an dem zweiten Werkstück 11 sowie an dem dritten Werkstück 12 anliegt und sich zwischen den Werkstücken 10, 11 und 12 keine Gaseinschlüsse befinden. Dies macht ein Verschweißen der Werkstücke 10, und 11 entlang einer meanderförmigen Linie über die gesamte Fläche des Sandwich-Brennelementes erforderlich. Auf der anderen Seite finden in dem U/Mo-Blech schon bei vergleichsweise niedrigen Temperaturen Phasenumwandlungen statt, die das Material für den Einsatz als Brennelement unbrauchbar machen. Daher muss beim Verschweißen vermieden werden, dass das erste Werkstück 10 hohen Temperaturen ausgesetzt ist. Bei dem erfindungsgemäßen Verfahren werden das dritte Werkstück 12, das erste Werkstück 10 und das zweite Werkstück 11 übereinander auf der Stützfläche 13 angeordnet.

Vor dem Anordnen des zweiten Werkstücks 11 auf dem ersten Werkstück 10 kann die zu dem zweiten Werkstück 11 weisende Oberfläche des ersten Werkstücks 10 in dem Bereich, wo später die Schweißnaht gebildet werden soll, mittels der Elektronenkanone 18 (Fig. 1) bestrahlt werden, um Oxide, die die Bildung der Schweißnaht behindern könnten, zu entfernen. Denn eine Oxidschicht kann als Diffusionsbarriere wirken und damit die Bildung einer stoffschlüssigen Verbindung zwischen den Werkstücken 10, 11 erschweren. Außerdem dient die Elektronenbestrahlung dazu, Mikrobohrungen auf der dem zweiten Werkstück 11 zugewandten Oberfläche des ersten Werkstücks 10 zu erzeugen, was zu einem mechanischen "Verzahnen" der Werkstücke 10, 11 und damit zu einer stabileren Verbindung führt.

Anschließend wird das Reibwerkzeug 1 in Richtung des Pfeils 35 auf die von dem ersten Werkstück 10 abgewandte Oberfläche des zweiten Werkstücks 11 aufgesetzt und das Reibwerkzeug 1 wird durch den Antrieb 2 (Fig. 1) in Rotation versetzt, wie durch den Pfeil 36 angedeutet. Dabei reibt die Reibfläche 4 an der von dem ersten Werkstück 10 abgewandten Oberfläche des zweiten Werkstücks 11 wobei der Kontaktbereich zwischen der Reibfläche 4 und dem zweiten Werkstück 11 vollständig in der von dem ersten Werkstück 10 abgewandten Oberfläche des zweiten Werkstücks 11 verläuft. Dabei ist die Rotationsgeschwindigkeit um die Rotationsachse 3 des Reibwerkzeugs 1 so gewählt, dass ein hinreichend großer Bereich des zweiten Werkstücks 11 unterhalb des Reibwerkzeugs 1 plastifiziert wird und sich eine Schweißverbindung zwischen dem ersten Werkstück 10 einerseits und dem zweiten Werkstück 11 andererseits unterhalb des Reibwerkzeugs 1 bildet. Dabei wird außerdem ein vorbestimmter Druck in Richtung des Pfeiles 35 auf die Oberfläche des zweiten Werkstücks 11 durch das Reibwerkzeug 1 ausgeübt, was die Bildung der Schweißverbindung fördert.

Um eine linienförmige Schweißnaht zwischen den Werkstücken 10, 11 zu erreichen, wird das Reibwerkzeug unter fortgesetzter Rotation und bei gleichbleibendem Druck auf den Werkstückstapel 9 in Richtung des Pfeils 37 weiterbewegt.

Um die Bildung der Schweißverbindung zwischen den Werkstücken 10, 11 weiter zu fördern, wird während der Rotation des Reibwerkzeugs 1 über das Induktionsheizelement 19 Wärme insbesondere in das dritte Werkstück 12 und das erste Werkstück 10 eingebracht. Dabei wird das Induktionsheizelement 19 parallel zur Bewegung des Reibwerkzeugs 1 mit diesem mitbewegt. Auf diese Weise wird nur ein begrenzter Bereich der Werkstücke 10, 11 und 12 durch das Induktionsheizelement 19 aufgeheizt (siehe hierzu Fig. 1). Der Energieeintrag in die Werkstücke 10, 11 und 12 infolge des Aufheizens ist in jedem Fall jedoch weit unterhalb der Schwelle, ab der in den Werkstücken 10, 11 und 12 größere Gefügeveränderungen vorkommen, die insbesondere auch im Bereich außerhalb der Schweißnähte auftreten.

Um zu vermeiden, dass sich die Werkstücke 10, 11 und 12 während des Verschweißens gegeneinander verwölben, wird durch die ersten Klemmelemente 7, 7' eine erste Zugspannung auf die Werkstücke 10, 11 und 12 ausgeübt, wobei diese erste Zugspannung parallel zu der Ebene der an dem Reibwerkzeug 1 anliegenden Oberfläche des zweiten Werkstücks 11 verläuft. Parallel dazu wird eine zweite Zugspannung durch die zweiten Klemmelemente 14, 14' auf die Werkstücke 10, 11 und 12 ausgeübt, wobei diese zweite Zugspannung ebenfalls parallel zur Ebene der an dem Reibwerkzeug 1 anliegenden Oberfläche des zweiten Werkstücks 11 verläuft und dabei senkrecht zu der ersten Zugspannung ist. Dadurch wird der Werkstückstapel 9 in seiner Erstreckungsebene unter Spannung gehalten, sodass es nicht zu Verwölbungen kommen kann.

Um zu verhindern, dass sich insbesondere das zweite Werkstück 11 von den anderen Werkstücken 10, 12 abhebt, kann das zweite Werkstück 11 in Bewegungsrichtung 36 des Reibwerkzeugs 1 gesehen vor diesem in Richtung des ersten Werkstücks 10 gedrückt werden, wobei der unter Bezug auf Fig. 9 beschriebene Niederhalter 26 Anwendung findet.

Wie bereits unter Bezugnahme auf die Fig. 5, 6 und 7 erläutert, weist die Reibfläche 4 Nuten 22 auf, entlang derer während der Rotation des Reibwerkzeugs 1 ein Transport von plastifiziertem Material vom Rand des Reibwerkzeugs 1 zur Rotationsachse 3 hin erfolgen kann. Dies verhindert, dass während der Bewegung des Reibwerkzeugs 1 in Richtung des Pfeils 36 aufgrund der Rotation Material aus dem Bereich abgetragen wird, in dem die Schweißnaht erzeugt wird.

Während des Bewegens des Reibwerkzeugs 1 in Richtung des Pfeils 37 wird der Zwischenraum zwischen den Werkstücken 10, 11 und 12 über den Vakuumanschluss 16 evakuiert (siehe Fig. 3), sodass es nicht zu Gaseinschlüssen zwischen den Werkstükken 10, 11 und 12 kommen kann.

In Fig. 11 ist eine alternative Ausführungsform eines Verfahrens dargestellt, bei dem die Rotationsachse 3' des Reibwerkzeugs 1" parallel zur Oberfläche des zweiten Werkstücks 11 verläuft (Ausführungsform nicht im Gegenstand der Erfindung). Im Übrigen wird das Verfahren in gleicher Weise durchgeführt, wie dies bereits im Zusammenhang mit Fig. 10 erläutert worden ist. Dabei weist die Umfangsfläche des Zylinderabschnitts 23 des Reibwerkzeugs 1" spiralförmige Umfangsnuten 24, 25 auf, die bereits im Zusammenhang mit Fig. 7 erläutert worden sind. Diese bewirken einen Materialtransport von den Enden des Zylinderabschnitts 23 zu dessen Mitte. Dadurch wird vermieden, dass bei der Bewegung des Reibwerkzeugs 1 parallel zur Oberfläche des zweiten Werkstücks 11 Material aus dem Bereich der Schweißnaht herausgedrückt wird.

Mittels der Vorrichtung zur Durchführung des erfindungsgemäßen Verfahrens gemäß Figur 10 sowie des erfindungsgemäßen Verfahrens ist es möglich, flächige Werkstücke 10, 11 und 12 entlang ihrer Oberflächen, also bei einem Parallelstoß, miteinander zu verschweißen, ohne dass einerseits eine so große Erwärmung der Werkstücke 10, 11 und 12 eintritt, dass es zu Gefügeveränderungen in den Werkstücken 10, 11, 12 kommt, und ohne dass andererseits eine Durchmischung der Materialien der Werkstücke 10, 11 und 12 auftritt. Damit ist das Verfahren besonders zum Verbinden dünner Bleche geeignet, wie es bei der Herstellung von Sandwich-Brennelementen erforderlich ist. Außerdem können Beschichtungen zum Korrosionsschutz oder zur Verbesserung der Oberflächenhärte auf Werkstücke aufgebracht werden, wobei eine definierte Grenzfläche zwischen dem Werkstück und der Beschichtung verbleibt und es nicht zu einer Durchmischung der Materialien kommt.

## Patentansprüche

1. Verfahren zum Erstellen einer linienförmigen Schweißverbindung zwischen einem ersten Werkstück (10) und einem zweiten Werkstück (11) mit den folgenden Schritten:
Bereitstellen eines ersten Werkstücks (10) und eines zweiten Werkstücks (11),
Anordnen des zweiten Werkstücks (11) auf einer Oberfläche des ersten Werkstücks (10), und
Aufsetzen eines Reibwerkzeugs (1) mit dessen Reibfläche (4) auf die von dem ersten Werkstück (10) abgewandte Oberfläche des zweiten Werkstücks (11),
Rotieren des Reibwerkzeugs (1), sodass eine Schweißverbindung zwischen dem ersten Werkstück (10) und dem zweiten Werkstück (11) gebildet wird, wobei die Reibfläche (4) an der von dem ersten Werkstück (10) abgewandten Oberfläche des zweiten Werkstücks (11) reibt, wobei das Reibwerkzeug (1) während dessen Rotation entlang der von dem ersten Werkstück (10) abgewandten Oberfläche des zweiten Werkstücks (11) bewegt wird und wobei das Reibwerkzeug (1) um eine Achse (3) senkrecht zu der von dem ersten Werkstück (10) abgewandten Oberfläche des zweiten Werkstücks (11) rotiert wird, **dadurch gekennzeichnet, dass** der Kontaktbereich zwischen der Reibfläche (4) und dem zweiten Werkstück (11) vollständig in der von dem ersten Werkstück (10) abgewandten Oberfläche des zweiten Werkstücks (11) verläuft und dass die Rotation des Reibwerkzeugs (1) durch Mittel an der Reibfläche (4) einen Materialtransport vom Rand des Reibwerkzeugs (1) zur Rotationsachse (3) hin bewirkt.

2. Verfahren nach Anspruch 1, wobei beim Rotieren des Reibwerkzeugs (1) das Reibwerkzeug (1) mit einem vorbestimmten Druck gegen die Oberfläche des zweiten Werkstücks (11) gepresst wird.

3. Verfahren nach Anspruch 1, wobei das zweite Werkstück (11) in Bewegungsrichtung des Reibwerkzeugs (1) gesehen vor diesem in Richtung des ersten Werkstücks (10) gedrückt wird.

4. Verfahren nach einem der Ansprüche 1 bis 3, wobei das erste Werkstück (10) aufgeheizt wird.

5. Verfahren nach Anspruch 4, wobei das erste Werkstück (10) mit einer Oberfläche, die dem zweiten Werkstück (11) abgewandt ist, an einem Heizelement anliegt.

6. Verfahren nach Anspruch 4 oder 5, wobei das erste Werkstück (10) induktiv aufgeheizt wird.

7. Verfahren nach einem der Ansprüche 4 bis 6, wobei das Aufheizen des ersten Werkstücks (10) auf den Bereich des ersten Werkstücks (10) beschränkt ist, der dem Reibwerkzeug (1) gegenüberliegt.

8. Verfahren nach einem der Ansprüche 1 bis 7, wobei ein drittes Werkstück (12) bereitgestellt wird, wobei das erste Werkstück (10) auf dem dritten Werkstück (12) angeordnet wird und wobei das zweite Werkstück (11) auf dem ersten Werkstück angeordnet wird.

9. Verfahren nach einem der Ansprüche 1 bis 8, wobei eine erste Zugspannung auf die Werkstücke (10, 11, 12) ausgeübt wird und wobei die erste Zugspannung parallel zu der Ebene der an dem Reibwerkzeug (1) anliegenden Oberfläche des zweiten Werkstücks (11) verläuft.

10. Verfahren nach Anspruch 9, wobei eine zweite Zugspannung auf die Werkstücke (10, 11, 12) ausgeübt wird, wobei die zweite Zugspannung parallel zu der Ebene der an dem Reibwerkzeug (1) anliegenden Oberfläche des zweiten Werkstücks (11) verläuft und wobei zumindest eine Komponente der zweiten Zugspannung senkrecht zu der ersten Zugspannung verläuft.

11. Verfahren nach einem der Ansprüche 1 bis 10, wobei vor dem Anordnen des zweiten Werkstücks (11) auf dem ersten Werkstück (10) die zu dem zweiten Werkstück (11) weisende Oberfläche des ersten Werkstücks (10) zumindest teilweise bestrahlt wird.

12. Verfahren nach Anspruch 11, wobei die zu dem zweiten Werkstück (11) weisende Oberfläche des ersten Werkstücks (10) mit einem Laser bestrahlt wird.

13. Verfahren nach Anspruch 11 oder 12, wobei die zu dem zweiten Werkstück (11) weisende Oberfläche des ersten Werkstücks (10) mit einem Elektronenstrahl bestrahlt wird.

14. Verfahren nach einem der Ansprüche 1 bis 13, wobei der Bereich zwischen den Werkstücken (10, 11, 12) evakuiert wird.

## Claims

1. Method for producing a linear welded connection between a first workpiece (10) and a second workpiece (11), comprising the following steps of:
providing a first workpiece (10) and a second workpiece (11),
arranging the second workpiece (11) on a surface of the first workpiece (10), and
placing a friction tool (1) by the friction area (4) thereof onto that surface of the second workpiece (11) which is remote from the first workpiece (10),
rotating the friction tool (1), with the result that a welded connection is formed between the first workpiece (10) and the second workpiece (11), the friction area (4) rubbing on that surface of the second workpiece (11) which is remote from the first workpiece (10), the friction tool (1) being moved during the rotation thereof along that surface of the second workpiece (11) which is remote from the first workpiece (10) and the friction tool (1) being rotated about an axis (3) perpendicular to that surface of the second workpiece (11) which is remote from the first workpiece (10), **characterised in that** the contact region between the friction area (4) and the second workpiece (11) is running completely **in that** surface of the second workpiece (11) which is remote from the first workpiece (10), and that the rotation of the friction tool (1) is effecting a material transport from the edge of the friction tool (1) towards the axis (3) of rotation by means on the friction area (4).

2. Method according to claim 1, the friction tool (1) being pressed against the surface of the second workpiece (11) with a predetermined pressure during the rotation of the friction tool (1).

3. Method according to claim 1, the second workpiece (11) being pressed in the direction of the first workpiece (10) before the friction tool (1) as seen in the direction of movement of said friction tool (1).

4. Method according to any of claims 1 to 3, the first workpiece (10) being heated.

5. Method according to claim 4, the first workpiece (10) bearing against a heating element by a surface which is remote from the second workpiece (11).

6. Method according to either of claim 4 or 5, the first workpiece (10) being heated inductively.

7. Method according to any of claims 4 to 6, the heating of the first workpiece (10) being restricted to that region of the first workpiece (10) which lies opposite the friction tool (1).

8. Method according to any of claims 1 to 7, a third workpiece (12) being provided, the first workpiece (10) being arranged on the third workpiece (12) and the second workpiece (11) being arranged on the first workpiece.

9. Method according to any of claims 1 to 8, a first tensile stress being exerted on the workpieces (10, 11, 12) and the first tensile stress running parallel to the plane of that surface of the second workpiece (11) which bears against the friction tool (1).

10. Method according to claim 9, a second tensile stress being exerted on the workpieces (10, 11, 12), the second tensile stress running parallel to the plane of that surface of the second workpiece (11) which bears against the friction tool (1), and at least one component of the second tensile stress running perpendicular to the first tensile stress.

11. Method according to any of claims 1 to 10, that surface of the first workpiece (10) which faces the second workpiece (11) being at least partly irradiated before the second workpiece (11) is arranged on the first workpiece (10).

12. Method according to claim 11, that surface of the first workpiece (10) which faces the second workpiece (11) being irradiated by means of a laser.

13. Method according to either of claim 11 or 12, that surface of the first workpiece (10) which faces the second workpiece (11) being irradiated by means of an electron beam.

14. Method according to any of claims 1 to 13, the region between the workpieces (10, 11, 12) being evacuated.

## Revendications

1. Procédé pour réaliser une liaison soudée en forme de ligne entre un premier objet (10) et un deuxième objet (11) avec les étapes suivantes :
- fournir un premier objet (10) et un deuxième objet (11),
- positionner le deuxième objet (11) sur une surface du premier objet (10), et
- placer un outil de frottement (1) avec sa surface de frottement (4) sur la surface du deuxième objet (11) opposée au premier objet (10),
- tourner l'outil de frottement (1), de sorte qu'une liaison soudée entre le premier objet (10) et le deuxième objet (11) est formée, la surface de frottement (4) frottant au niveau de la surface du deuxième objet (11) opposée au premier objet (10), l'outil de frottement (1) étant déplacé pendant sa rotation le long de la surface du deuxième objet (11) opposée au premier objet (10), et l'outil de frottement (1) étant pivoté autour d'un axe (3) perpendiculaire à la surface du deuxième objet (11) opposée au premier objet (10), **caractérisé en ce que** la zone de contact entre la surface de frottement (4) et le deuxième objet (11) s'étend totalement dans la surface du deuxième objet (11) opposée au premier objet (11) et **en ce que** la rotation de l'outil de frottement (1) provoque un transport de matière par l'intermédiaire de la surface de frottement (4) depuis le bord de l'outil de frottement (1) vers l'axe de rotation (3).

2. Procédé selon la revendication 1, dans lequel, lors de la rotation de l'outil de frottement (1), l'outil de frottement (1) est pressé contre la surface du deuxième objet (11) avec une pression prédéterminée.

3. Procédé selon la revendication 1, dans lequel le deuxième objet (11) est pressé, vu dans le sens de déplacement de l'outil de frottement (1), devant celui-ci en direction du premier objet (10).

4. Procédé selon l'une des revendications 1 à 3, dans lequel le premier objet (10) est chauffé.

5. Procédé selon la revendication 4, dans lequel le premier objet (10) est en contact par une surface qui est opposée au deuxième objet (11), avec un élément de chauffage.

6. Procédé selon la revendication 4 ou 5, dans lequel le premier objet (10) est chauffé de manière inductive.

7. Procédé selon l'une des revendications 4 à 6, dans lequel le réchauffement du premier objet (10) est limité à la zone du premier objet (10) qui fait face à l'outil de frottement (1).

8. Procédé selon l'une des revendications 1 à 7, dans lequel un troisième objet (12) est fourni, le premier objet (10) étant disposé sur le troisième objet (12) et le deuxième objet (11) étant disposé sur le premier objet.

9. Procédé selon l'une des revendications 1 à 8, dans lequel un premier effort de traction est exercé sur les objets (10, 11, 12) et dans lequel le premier effort de traction est parallèle au plan de la surface du deuxième objet (11) en contact avec l'outil de frottement (1).

10. Procédé selon la revendication 9, dans lequel un deuxième effort de traction est exercé sur les objets (10, 11, 12), dans lequel le deuxième effort de traction est parallèle au plan de la surface du deuxième objet (11) en contact avec l'outil de frottement (1), et dans lequel au moins une composante du deuxième effort de traction est perpendiculaire au premier effort de traction.

11. Procédé selon l'une des revendications 1 à 10, dans lequel avant de positionner le deuxième objet (11) sur le premier objet (10), la surface du premier objet (10) faisant face au deuxième objet (11) est au moins partiellement irradiée.

12. Procédé selon la revendication 11, dans lequel la surface du premier objet (10) faisant face au deuxième objet (11) est irradiée avec un laser.

13. Procédé selon la revendication 11 ou 12, dans lequel la surface du premier objet (10) faisant face au deuxième objet (11) est irradiée avec un faisceau d'électrons.

14. Procédé selon l'une des revendications 1 à 13, dans lequel la zone entre les objets (10, 11, 12) est évacuée.
